# NEUE EUROPÄISCHE PATENTSCHRIFT

(11) **EP 3 400 803 B2**
(45) Veröffentlichungstag und Bekanntmachung des Hinweises auf die Entscheidung über den Einspruch: **15.03.2023**
(45) Hinweis auf die Patenterteilung: 13.05.2020
(21) Anmeldenummer: 18164109.3
(22) Anmeldetag: 27.03.2018
(51) Int. Cl.: A21C 9/08, B65G 15/16, A21C 3/06

(54) **VERFAHREN UND VORRICHTUNG ZUM AUSRICHTEN VON GEWICKELTEN TEIGPRODUKTEN ENTLANG EINER BREMSSTRECKE**
METHOD AND DEVICE FOR ORIENTING COILED DOUGH PRODUCTS ALONG A BRAKE PATH
PROCÉDÉ ET DISPOSITIF D'ALIGNEMENT DES PRODUITS À BASE DE PÂTE ENROULÉS LE LONG D'UNE DISTANCE DE FREINAGE

(30) Priorität: 09.05.2017 DE 102017109925
(43) Veröffentlichungstag der Anmeldung: 14.11.2018
(73) Patentinhaber: Fritsch Bakery Technologies GmbH & Co. KG, 97348 Markt Einersheim (DE)
(72) Erfinder: BERNHARDT, Udo, 97346 Iphofen (DE)
(74) Vertreter: Grünecker Patent- und Rechtsanwälte PartG mbB

(56) Entgegenhaltungen:
- EP-A2- 1 342 415
- EP-A2- 1 747 724
- WO-A2-2012/062267
- DE-A1- 4 402 346
- DE-U1-202008 003 923
- NL-C2- 1 025 310
- US-A- 5 538 414
- DATABASE WPI Week 198432 Thomson Scientific, London, GB; AN 1984-199128 XP002784451, & NL 8 204 931 A (WERNER & PFLEIDERER) 16. Juli 1984 (1984-07-16)

## Beschreibung

Die Erfindung betrifft ein Verfahren zum Ausrichten von gewickelten Teigprodukten in einer definierten Schlusslage nach dem Oberbegriff des Anspruchs 1. Weiter betrifft die Erfindung eine Vorrichtung zur Durchführung des erfindungsgemäßen Verfahrens.

Eine Vorrichtung zum Rollen von Teig in eine längliche Form, beispielsweise zur Herstellung von Stangenbrot, ist aus der NL 8204931 A bekannt. Die Vorrichtung wird dazu eingesetzt die Längenausdehnung einer, insbesondere aus einem rechteckigen Teigstück, gewickelten Teigrolle durch Ausrollen auf eine gewünschte Länge zu vergrößern. Dazu umfasst die Vorrichtung eine Übergabezone zur Übergabe einer Teigrolle von einem ersten auf ein zweites Förderband, wobei die Förderbänder gegenläufig zueinander angetrieben sind und das zweite Förderband mit einem oberhalb des zweiten Förderbands angeordneten dritten Förderband ein Zweibandsystem bildet. Zur problemlosen Übergabe einer Teigrolle wird das zweite Förderband bei Ankunft einer Teigrolle vorübergehend angehalten. Mittels einer Kontrolleinrichtung wird die Ankunft sowie die Höhe einer Teigrolle in einer Übergabezone registriert, um eine Beschädigung der Teigrolle bei der Übergabe beispielsweise durch Umkehrung der Antriebsrichtung des zweiten Förderbands zu vermeiden
Aus der WO 2012/062267 A2 sind ein gattungsgemäßes Verfahren und eine gattungsgemäße Vorrichtung zum Ausrichten von gewickelten Teigprodukten in einer definierten Schlusslage bekannt. Dieses Verfahren wird insbesondere dazu eingesetzt, um aus trapezförmigen Teigstücken gewickelte Teigprodukte, beispielsweise Croissants, vor dem Backen in einer definierten Schlusslage auszurichten. Das Verfahren beruht dabei auf dem Grundgedanken, dass die gewickelten Teigprodukte nach dem Durchlaufen der Wickelstrecke von einer translatorischen Anfangsgeschwindigkeit auf eine geänderte translatorische Zwischengeschwindigkeit abgebremst werden. Dazu durchlaufen die gewickelten Teigprodukte eine Bremsstrecke. Durch das Abbremsen der gewickelten Teigprodukte wirkt auf die Teigprodukte ein Bremsmoment, durch das die Teigprodukte in eine Abrollbewegung versetzt werden. Durch dieses Abrollen der Teigprodukte rollen diese mit einem Drehsinn, der der Wickelrichtung von innen nach außen des gewickelten Teigprodukts entspricht, auf einer Unterlage ab. Beim Erreichen der Schlusslage, bei der der Schluss des Teigprodukts auf der Unterlage anliegt, wird die Abrollbewegung durch den vom Schluss verursachten Rollwiderstand gestoppt. Im Ergebnis kann also durch das Abbremsen der Teigprodukte und das damit verbundene Abrollen der Teigprodukte auf der Unterlage ohne Weiteres eine definierte Schlusslage erreicht werden, bei der der Schluss des Teigprodukts auf der Unterlage anliegt.

Das Ausrichten der Teigprodukte in der definierten Schlusslage durch das Abbremsen entlang der Bremsstrecke erfordert die Einstellung relativ exakter Randbedingungen hinsichtlich der Anfangs- und Endgeschwindigkeit des Teigprodukts, um zu verhindern, dass das Teigprodukt über den Schluss hinwegrollt, wenn beispielsweise das durch das Bremsmoment erzeugte Antriebsmoment zu groß ist. Umgekehrt darf das vom Bremsmoment erzeugte Antriebsmoment auch nicht zu klein sein, da ansonsten die durch das Abbremsen bewirkte Abrollbewegung nicht ausreicht, um die definierte Schlusslage zu erreichen. Problematisch ist es dabei, dass die Randbedingungen des Abbremsens entlang der Bremsstrecke bisher nicht frei gewählt werden können. Insbesondere ist die Anfangsgeschwindigkeit des Teigprödukts beim Verlassen der Wickelstrecke sehr stark von der jeweils gewünschten Produktionsgeschwindigkeit abhängig, da die Teigprodukte bei höheren Taktfrequenzen mit immer höheren Geschwindigkeiten durch die Wickelstrecke transportiert werden. Außerdem führen die höheren Taktfrequenzen dazu, dass auch die Rotationsgeschwindigkeit der Teigstücke beim Verlassen der Wickelstrecke immer höher ist. Diese starke Rotation der Teigstücke beim Verlassen der Wickelstrecke führt außerdem zu einer Taumelbewegung der Teigstücke, die ein definiertes Abbremsen der Teigstücke im unmittelbaren Anschluss an das Verlassen der Wickelstrecke vielfach unmöglich macht.

Ausgehend von diesem Stand der Technik ist es deshalb die Aufgabe der vorliegenden Erfindung, ein Verfahren und eine Vorrichtung zum Ausrichten von gewickelten Teigprodukten durch Abbremsen in einer Bremsstrecke vorzuschlagen, wobei auch sehr hohe Taktfrequenzen ermöglicht werden. Insbesondere soll auch die hohe Ausschussrate, wie sie beim Betrieb bekannter Vorrichtungen bei hohen Taktfrequenzen auftritt, verringert werden.

Diese Aufgabe wird durch ein Verfahren und eine Vorrichtung nach der Lehre der beiden unabhängigen Hauptansprüche gelöst.

Vorteilhafte Ausführungsformen der Erfindung sind Gegenstand der Unteransprüche.

Das erfindungsgemäße Verfahren beruht auf dem Grundgedanken, dass zwischen dem Ende der Wickelstrecke und vor Beginn der Bremsstrecke eine zusätzliche Kontrollstrecke vorgesehen ist, die von den gewickelten Teigprodukten durchlaufen wird. In der Kontrollstrecke ist es dabei vorgesehen, dass zwei umlaufend angetriebene Förderbänder im Anschluss an die Wickelstrecke am Teigprodukt in Eingriff gebracht werden und die translatorische Fördergeschwindigkeit der gewickelten Teigprodukte und/oder die Rotationsgeschwindigkeit der gewickelten Teigprodukte verändert und auf einen vorgegebenen Sollwert eingestellt werden. Insbesondere ist es dadurch möglich, die am Ende der Wickelstrecke wartende translatorische Fördergeschwindigkeit der gewickelten Teigprodukte bzw. die Rotationsgeschwindigkeit der gewickelten Teigprodukte, die sehr stark von der jeweiligen Produktionsfrequenz beim Wickeln abhängt, in einer Weise zu verändern und einzustellen, dass anschließend die in der Kontrollstrecke eingestellten Randbedingungen ein Erreichen der definierten Schlusslage beim Abbremsen der Teigprodukte in der Bremsstrecke ermöglichen.

Von sehr großer Bedeutung für das korrekte Abbremsen der Teigprodukte in der Bremsstrecke und das dadurch erreichte Einstellen der definierten Schlusslage mit einem bestimmten Bereich ist die Rotationsgeschwindigkeit der gewickelten Teigprodukte. Gerade diese Rotationsgeschwindigkeit der gewickelten Teigprodukte wird durch eine Erhöhung der Taktfrequenz in der Wickelstrecke stark erhöht, was jedoch das korrekte Abbremsen der Teigprodukte in der Bremsstrecke zum Einstellen der definierten Schlusslage erheblich erschwert. Denn die gewickelten Teigprodukte verlassen bisher bei hohen Taktfrequenzen die Wickeleinrichtung mit unkontrollierbaren Taumelbewegungen. Es ist deshalb besonders vorteilhaft, wenn die Rotationsgeschwindigkeit der gewickelten Teigprodukte in der Kontrollstrecke abgebremst wird, um die für das Abbremsen beim Einstellen der definierten Schlusslage in der Bremsstrecke mögliche maximale Anfangsgeschwindigkeit nicht zu überschreiten.

Wie stark die Rotationsgeschwindigkeit der gewickelten Teigprodukte in der Kontrollstrecke abgebremst wird, ist abhängig von der Produktionsqualität während des Bremsens in der Bremsstrecke. Besonders vorteilhaft ist es, wenn die Rotationsgeschwindigkeit der gewickelten Teigprodukte in der Kontrollstrecke auf einen Wert Null abgebremst wird, d.h. die Teigprodukte am Ende der Kontrollstrecke keine Eigenrotation mehr aufweisen.

Alternativ dazu kann die Rotationsgeschwindigkeit des gewickelten Teigprodukts in der Kontrollstrecke auch in die Gegenrichtung umgekehrt werden, so dass diese Rotationsbewegung in Gegenrichtung gerade der Rotationsbewegung beim Abbremsen in der Bremsstrecke entspricht. Dadurch kann das erforderliche Bremsmoment signifikant herabgesetzt werden.

In welcher Weise die gewickelten Teigprodukte in der Bremsstrecke abgebremst werden, ist grundsätzlich beliebig. Besonders einfach kann dies bei der erfindungsgemäß vorgesehenen Verwendung einer Kontrollstrecke dadurch erfolgen, dass die Teigprodukte von einem ersten umlaufend angetriebenen Förderband mit einer ersten Fördergeschwindigkeit auf ein zweites umlaufend angetriebenes Förderband mit einer zweiten Fördergeschwindigkeit übergeben werden. Durch den entsprechenden Unterschied zwischen der ersten Fördergeschwindigkeit und der zweiten Fördergeschwindigkeit können die gewickelten Teigprodukte durch diese Übergabe abgebremst und dadurch in die gewünschte Abrollbewegung versetzt werden. Um die gewickelten Teigprodukte bei der Übergabe vom ersten Förderband auf das zweite Förderband leichter in die Abrollbewegung versetzen zu können, ist es besonders vorteilhaft, wenn die gewickelten Teigprodukte in der Bremsstrecke bei der Übergabe vom ersten Förderband auf das zweite Förderband vertikal nach unten versetzt werden. Durch diese kleine Fallbewegung der gewickelten Teigprodukte bei der Übergabe vom ersten Förderband auf das zweite Förderband wird der Abrollimpuls vergrößert, und es werden reproduzierbare Prozessbedingungen geschaffen. Die erfindungsgemäße Vorrichtung zur Durchführung des erfindungsgemäßen Verfahrens beim Ausrichten von gewickelten Teigprodukten umfasst in gattungsgemäßer Weise eine Wickelstrecke und eine Bremsstrecke. In der Wickelstrecke werden die Teigstücke zu Teigprodukten gewickelt. In der nachgeordneten Bremsstrecke können die gewickelten Teigprodukte durch entsprechendes Abbremsen in eine Abrollbewegung versetzt werden, um die definierte Schlusslage, in der der Schluss des Teigprodukts an der Unterlage anliegt, zu ermöglichen. Die erfindungsgemäße Vorrichtung ist durch eine Fördereinrichtung charakterisiert, die eine Kontrollstrecke zwischen der Wickelstrecke und der Bremsstrecke bildet. Die Fördereinrichtung ist dabei dadurch gekennzeichnet, dass die Fördereinrichtung aus zwei umlaufend angetriebenen Förderbändern gebildet ist und die translatorische Fördergeschwindigkeit der gewickelten Teigprodukte bzw. die Rotationsgeschwindigkeit der gewickelten Teigprodukte beim Durchlauf der Kontrollstrecke zwischen der Wickelstrecke und der Bremsstrecke verändert werden kann.

Besonders einfach kann das erste Förderband von unten an den gewickelten Teigprodukten zum Eingriff kommen und das zweite Förderband von oben an den gewickelten Teigprodukten zum Eingriff kommen. Durch geeignete Einstellung der Umlaufgeschwindigkeit des ersten Förderbands relativ zur Umlaufgeschwindigkeit des zweiten Förderbands kann dann durch den gleichzeitigen Eingriff der beiden Förderbänder die translatorische Fördergeschwindigkeit des Teigprodukts bzw. die Rotationsgeschwindigkeit des gewickelten Teigprodukts in der gewünschten Weise verändert und gegebenenfalls auf einen vorgegebenen Sollwert eingestellt werden.

Um eine einfache Justierung der in der Kontrollstrecke eingestellten translatorischen Fördergeschwindigkeit bzw. Rotationsgeschwindigkeit des gewickelten Teigprodukts zu ermöglichen, ist es besonders vorteilhaft, wenn die Umlaufgeschwindigkeit des ersten Förderbands und/oder die Umlaufgeschwindigkeit des zweiten Förderbands unabhängig voneinander einstellbar sind.

Beim Wickeln der Teigstücke kann es vorkommen, dass die gewickelten Teigprodukte aus der gewünschten Mittellage nach rechts bzw. nach links versetzt werden. Diese Lagefehler der gewickelten Teigprodukte sind für die nachfolgenden Produktionsstufen von Nachteil, beispielsweise wenn die gewickelten Teigprodukte nachfolgend gebogen werden sollen, um traditionelle Croissants zu bilden. Um diese Lagefehler in einfacher Weise ohne großen zusätzlichen Aufwand korrigieren zu können, ist es besonders vorteilhaft, wenn das obere Förderband der Fördereinrichtung aus mindestens zwei zueinander beabstandet angeordneten Förderriemen besteht, wobei die beiden Förderriemen jeweils außermittig am gewickelten Teigstück zur Anlage kommen. Durch die beiden beabstandet angeordneten Förderriemen wird eine Zentrierbewegung der gewickelten Teigprodukte während des Durchlaufs der Kontrollstrecke erreicht. Liegen nämlich die gewickelten Teigstücke mit einem Lagefehler etwas zu weit links bzw. etwas zu weit rechts von der gewünschten Mittellinie, so führt die daraus resultierende Höhendifferenz auf der rechten bzw. linken Seite zu den jeweils anliegenden Förderriemen dazu, dass die gewickelten Teigstücke in Richtung der gewünschten Mittellage verschoben werden. Um die Kontrollstrecke und die dahinter angeordnete Bremsstrecke mit möglichst einfachen Mitteln konstruktiv realisieren zu können, ist es besonders vorteilhaft, wenn zur Bildung der Bremsstrecke hinter dem unteren Förderband der Kontrollstrecke ein Förderband mit einer geringeren Fördergeschwindigkeit angeordnet ist. Die Bremsstrecke wird dann dadurch gebildet, dass die gewickelten Teigprodukte von dem unteren Förderband der Kontrollstrecke auf das dahinterliegende Förderband mit der geringeren Fördergeschwindigkeit übergeben werden. Aufgrund der Differenz zwischen den Fördergeschwindigkeiten bei der Übergabe von dem unteren Förderband der Kontrollstrecke auf das dahinter angeordnete Förderband werden die Teigprodukte abgebremst und durch das dadurch bewirkte Bremsmoment in die gewünschte Abrollbewegung versetzt.

Um den Abrollimpuls noch zu verstärken, ist es besonders vorteilhaft, wenn zwischen dem unteren Förderband der Kontrollstrecke und dem dahinter angeordneten Förderband der Bremsstrecke ein vertikaler Höhenversatz nach unten vorgesehen ist, so dass die Teigprodukte bei der Übergabe von dem unteren Förderband der Kontrollstrecke auf das dahinterliegende Förderband ein kleines Stück nach unten fallen.

Eine Ausführungsform der Erfindung ist den Zeichnungen schematisiert dargestellt und wird nachfolgend beispielhaft erläutert.

Es zeigen:
- **Fig. 1**: eine schematisiert dargestellte Anlage zum Wickeln und Ausrichten von Teigprodukten in einer definierten Schlusslage in seitlicher Ansicht;
- **Fig. 2**: eine als Kontrollstrecke zwischen der Wickelstrecke und der Bremsstrecke der Anlage gemäß Fig. 1 angeordnete Fördereinrichtung in perspektivischer Ansicht von oben.

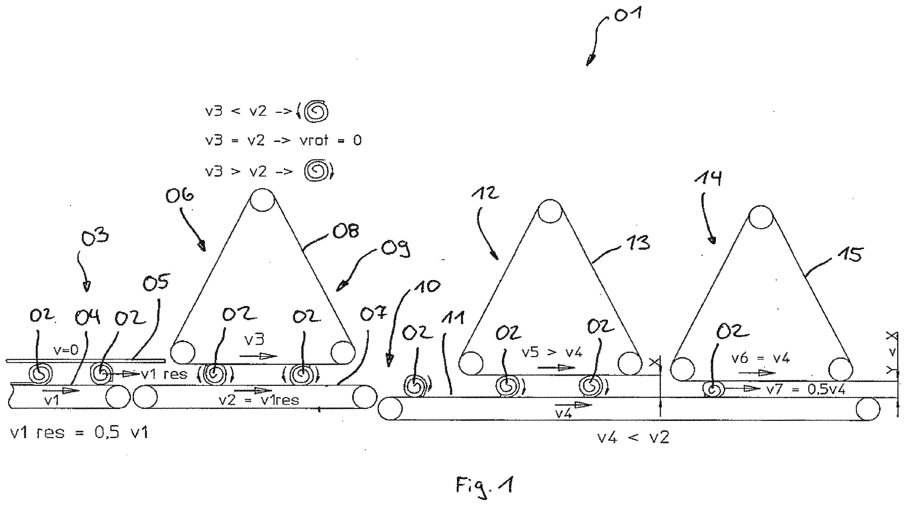

**Fig.** 1 zeigt eine Vorrichtung 01 zum Wickeln und Ausrichten von Teigprodukten 02 in einer definierten Schlusslage. Die Anlage 01 umfasst eine Wickelstrecke 03, in der die Teigprodukte 02 durch Wickeln von dreieckförmigen oder trapezförmigen Teigstücken hergestellt werden. In der Wickelstrecke 03 werden die Teigprodukte 02 auf einem Förderband 04 in Förderrichtung transportiert, wobei die Teigprodukte 02 mit ihrem oberen Scheidepunkt an einer feststehenden Wickelplatte 05 anliegen. Im Ergebnis bedeutet dies, dass die Teigprodukte 02 an ihrem unteren Scheitelpunkt mit einer Fördergeschwindigkeit bewegt werden, die der Umlaufgeschwindigkeit v1 des Förderbands 04 entspricht, wohingegen der obere Scheitelpunkt der Teigprodukte 02 die Geschwindigkeit Null aufweist. Durch die Geschwindigkeitsdifferenz zwischen der Wickelplatte 05 und dem Förderband 04 werden die Teigprodukte 02 in eine rotierende Wickelbewegung versetzt, so dass die Teigprodukte 02 am Ende der Wickelstrecke 03 eine translatorische Fördergeschwindigkeit v1res aufweisen. An die Wickelstrecke 03 schließt sich eine Kontrollstrecke 06 an, die aus einem unteren Förderband 07 und einem oberen Förderband 08 gebildet ist. Das Förderband 07 läuft dabei mit einer Fördergeschwindigkeit v2 um, wobei v2 gerade der translatorischen Fördergeschwindigkeit vires der Teigprodukte 02 am Ende der Wickelstrecke 03 entspricht. Die Umlaufgeschwindigkeit des Förderbands 08 kann variabel eingestellt werden, so dass sich abhängig von der Umlaufgeschwindigkeit v3 des Förderbands 08 relativ zur Umlaufgeschwindigkeit v2 des Förderbands 07 eine entsprechende Rotation der Teigprodukte 02 ergibt. Entspricht die Umlaufgeschwindigkeit v3 des Förderbands 08 gerade der Umlaufgeschwindigkeit v2 des Förderbands 07, so weisen die Teigprodukte 02 keine Rotationsgeschwindigkeit mehr auf und werden mit einer translatorischen Fördergeschwindigkeit von v2=v3 in Förderrichtung bewegt. Wird v3 etwas kleiner als v2 gewählt, so rotieren die Teigprodukte 02 entgegen dem Uhrzeigersinn, wohingegen für den Fall, dass v3 etwas größer als v2 ist, die Teigprodukte 02 im Uhrzeigersinn rotieren. Im Ergebnis kann so die Rotationsgeschwindigkeit der Teigprodukte 02 durch Wahl des Verhältnisses von v2:v3 problemlos eingestellt werden. Die translatorische Fördergeschwindigkeit der Teigprodukte 02 kann in gleicher Weise durch Wahl von v2 bzw. v3 eingestellt werden.

Im Ergebnis wird es durch die von den Förderbändern 07 und 08 gebildete Fördereinrichtung 09, die die Kontrollstrecke 06 bildet, möglich, dass die aus der Wickelstrecke 03 kommenden Teigprodukte 02 in ihrer translatorischen Fördergeschwindigkeit und ihrer Rotationsgeschwindigkeit exakt eingestellt werden, so dass die Bedingungen für das Ausrichten der Teigprodukte 02 in der nachfolgend angeordneten Bremsstrecke 10 optimiert sind.

In der Anlage 01 ist die Bremsstrecke 10 durch den Übergang vom Förderband 07 auf ein nachgeordnetes Förderband 11 realisiert. Das Förderband 11 wird dabei mit einer Umlaufgeschwindigkeit v4 angetrieben, die kleiner ist als die Umlaufgeschwindigkeit v2 des Förderbands 07. Durch diesen Geschwindigkeitsunterschied zwischen den Förderbändern 07 und 11 werden die Teigprodukte 02 bei der Übergabe vom Förderband 07 auf das Förderband 11 translatorisch abgebremst und zugleich durch das Bremsmoment in eine Abrollbewegung versetzt. Diese Abrollbewegung wird noch dadurch verstärkt, dass zwischen dem Förderband 11 und dem Förderband 07 ein kleiner vertikaler Höhenversatz vorgesehen ist, durch den die Teigprodukte beim Übergang vom Förderband 07 auf das Förderband 11 ein Stück weit herunterfallen. Durch die durch das Bremsmoment verursachte Abrollbewegung rollen die Teigprodukte 02 auf dem Förderband 11 ein Stück weit im Uhrzeigersinn ab, bis der vom Schluss der Teigprodukte verursachte Rollenwiderstand das Abrollen in der definierten Schlusslage, bei der der Schluss des Teigprodukts an der Unterlage, nämlich dem Förderband 11 anliegt, abstoppt. Im Ergebnis wird also das Teigprodukt 02 bei der Übergabe vom Förderband 07 auf das Förderband 11 so in Rotationsbewegung versetzt, bis es die definierte Schlusslage erreicht hat, bei der der Schluss durch die in Uhrzeigerrichtung gerichtete Abrollbewegung auf der Oberseite des Förderbands 11 anliegt.

Anschließend durchlaufen die Teigprodukte 02 eine Ausrichtstrecke 12, die im Zusammenwirken des Förderbands 11 mit einem Förderband 13 gebildet ist. Das Förderband 13 wird dabei mit einer Umlaufgeschwindigkeit v5 angetrieben, die etwas größer ist als die Umlaufgeschwindigkeit v4 des Förderbands 11. Durch diese Geschwindigkeitsdifferenz zwischen v5 und v4 wird erreicht, dass die Teigprodukte 02 entlang der Ausrichtstrecke 12 um ungefähr 45° im Uhrzeigersinn weitergedreht werden und damit mit ihrem Schluss auf der Oberseite des Förderbands 11 anliegen. An die Ausrichtstrecke 12 schließt sich eine Flachdrückstrecke 14 an. Die Flachdrückstrecke 14 ist aus dem Förderband 11 in Zusammenwirken mit einem Förderband 15 gebildet. Der vertikale Abstand Y zwischen dem Förderband 11 und dem Förderband 15 ist dabei kleiner als der Durchmesser X der Teigprodukte 02, so dass die Teigprodukte 02 in der Flachdrückstrecke 14 vertikal zusammengedrückt werden, um die Lage des Schlusses in der definierten Schlusslage zu sichern.

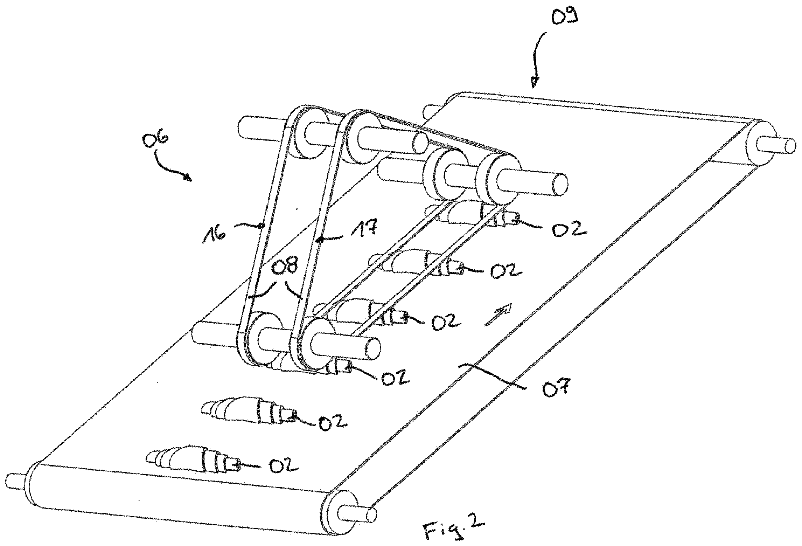

**Fig. 2** zeigt die Kontrollstrecke 06 mit der Fördereinrichtung 09 in perspektivischer Ansicht von schräg oben. Die Fördereinrichtung 09 besteht aus dem Förderband 07 und dem Förderband 08. Das Förderband 08 seinerseits besteht aus zwei beabstandet angeordneten Förderriemen 16 und 17, die außermittig an den gewickelten Teigprodukten 02 zum Eingriff kommen. Durch den Abstand der beiden Förderriemen 16 und 17 wird eine Zentrierung der Teigprodukte 02 mittig zwischen den beiden Förderriemen 16 und 17 erreicht.

## Patentansprüche

1. Verfahren zum Ausrichten von gewickelten Teigprodukten (02) in einer definierten Schlusslage, wobei das Teigprodukt (02) durch Wickeln eines dreieckförmigen oder trapezförmigen Teigstücks entlang einer Wickelstrecke (03) hergestellt ist, und wobei das Teigprodukt (02) von der Basis des Teigstücks her beginnend gewickelt ist, und wobei das schmalere Ende des Teigstücks einen außen am Umfang des Teigprodukts (02) überstehenden Schluss bildet, und wobei die Schlusslage des Teigprodukts (02) durch eine bestimmte Lage des außen überstehenden Schlusses definiert ist, und wobei das gewickelte Teigprodukt (02) entlang einer Bremsstrecke (10) von einer translatorischen Anfangsgeschwindigkeit auf eine translatorische Endgeschwindigkeit abgebremst wird, und wobei das daraus resultierende Bremsmoment als Antriebsmoment für eine Abrollbewegung des Teigprodukts (02) genutzt wird, um dadurch ein Abrollen des Teigprodukts (02) auf einer Unterlage zu bewirken, wobei der Drehsinn der Abrollbewegung des Teigprodukts (02) der Wickelrichtung von innen nach außen des gewickelten Teigprodukts (02) entspricht, und wobei die Abrollbewegung bei Erreichen der definierten Schlusslage, bei der der Schluss des Teigprodukts (02) an der Unterlage anliegt, durch den vom Schluss verursachten Rollwiderstand gestoppt wird,
**dadurch gekennzeichnet,**
**dass** das gewickelte Teigprodukt (02) zwischen dem Ende der Wickelstrecke (03) und vor Beginn der Bremsstrecke (10) eine Kontrollstrecke (06) durchläuft, wobei in der Kontrollstrecke (06) zwei umlaufend angetriebene Förderbänder (07, 08) im Anschluss an die Wickelstrecke (03) am Teigprodukt (02) in Eingriff gebracht werden, und wobei in der Kontrollstrecke (06) die translatorische Fördergeschwindigkeit des gewickelten Teigprodukts (02) und/oder die Rotationsgeschwindigkeit des gewickelten Teigprodukts (02) verändert und auf einen vorgegebenen Sollwert eingestellt werden.

2. Verfahren nach Anspruch 1,
**dadurch gekennzeichnet,**
**dass** die Rotationsgeschwindigkeit des gewickelten Teigprodukts (02) in der Kontrollstrecke (06) abgebremst wird.

3. Verfahren nach Anspruch 2,
**dadurch gekennzeichnet,**
**dass** die Rotationsgeschwindigkeit des gewickelten Teigprodukts (02) in der Kontrollstrecke (06) auf Null abgebremst wird.

4. Verfahren nach Anspruch 2,
**dadurch gekennzeichnet,**
**dass** die Rotationsgeschwindigkeit des gewickelten Teigprodukts (02) in der Kontrollstrecke (06) in die Gegenrichtung umgekehrt wird, wobei die Rotationsbewegung in Gegenrichtung der Rotationsbewegung beim Abbremsen in der Bremsstrecke (10) entspricht.

5. Verfahren nach einem der Ansprüche 1 bis 4,
**dadurch gekennzeichnet,**
**dass** das gewickelte Teigprodukt (02) in der Bremsstrecke (10) durch Übergabe von einem ersten umlaufend angetriebenen Förderband (07) mit einer ersten Fördergeschwindigkeit auf ein zweites umlaufend angetriebenes Förderband (11) mit einer zweiten Fördergeschwindigkeit abgebremst und dadurch in die gewünschte Abrollbewegung versetzt wird.

6. Verfahren nach Anspruch 5,
**dadurch gekennzeichnet,**
**dass** das gewickelte Teigprodukt (02) in der Bremsstrecke (10) bei der Übergabe vom ersten Förderband (07) auf das zweite Förderband (11) vertikal nach unten versetzt wird.

7. Vorrichtung (01) zur Durchführung eines Verfahrens zum Ausrichten von gewickelten Teigprodukten (02) in einer definierten Schlusslage, wobei das Teigprodukt (02) durch Wickeln eines dreieckförmigen oder trapezförmigen Teigstücks entlang einer Wickelstrecke (03) hergestellt ist, und wobei das Teigprodukt (02) von der Basis des Teigstücks her beginnend gewickelt ist, und wobei das schmalere Ende des Teigstücks einen außen am Umfang des Teigprodukts (02) überstehenden Schluss bildet, und wobei die Schlusslage des Teigprodukts (02) durch eine bestimmte Lage des außen überstehenden Schlusses definiert ist, und wobei das gewickelte Teigprodukt (02) entlang einer Bremsstrecke (10) von einer translatorischen Anfangsgeschwindigkeit auf eine translatorische Endgeschwindigkeit abgebremst wird, und wobei das daraus resultierende Bremsmoment als Antriebsmoment für eine Abrollbewegung des Teigprodukts (02) genutzt wird, um dadurch ein Abrollen des Teigprodukts (02) auf einer Unterlage zu bewirken, wobei der Drehsinn der Abrollbewegung des Teigprodukts (02) der Wickelrichtung von innen nach außen des gewickelten Teigprodukts (02) entspricht, und wobei die Abrollbewegung bei Erreichen der definierten Schlusslage, bei der der Schluss des Teigprodukts (02) an der Unterlage anliegt, durch den vom Schluss verursachten Rollwiderstand gestoppt wird, wobei das gewickelte Teigprodukt (02) zwischen dem Ende der Wickelstrecke (03) und vor Beginn der Bremsstrecke (10) eine Kontrollstrecke (06) durchläuft, wobei in der Kontrollstrecke (06) zwei umlaufend angetriebene Förderbänder (07, 08) im Anschluss an die Wickelstrecke (03) am Teigprodukt (02) in Eingriff gebracht werden, und wobei in der Kontrollstrecke (06) die translatorische Fördergeschwindigkeit des gewickelten Teigprodukts (02) und/oder die Rotationsgeschwindigkeit des gewickelten Teigprodukts (02) auf einen vorgegebenen Sollwert eingestellt werden,
wobei die Vorrichtung aufweist: die Wickelstrecke (03), in der Teigstücke zu Teigprodukten (02) gewickelt werden, und die Bremsstrecke (10), in der die Teigprodukte (02) in einer definierten Schlusslage abgebremst werden,
**dadurch gekennzeichnet,**
**dass** die Vorrichtung (01) zwischen der Wickelstrecke (03) und der Bremsstrecke (10) eine Fördereinrichtung (09) zur Bildung der Kontrollstrecke (06) aufweist, wobei mit der Fördereinrichtung (09) die translatorische Fördergeschwindigkeit des gewickelten Teigprodukts (02) und/oder die Rotationsgeschwindigkeit des gewickelten Teigprodukts (02) in der Kontrollstrecke (06) zwischen der Wickelstrecke (03) und der Bremsstrecke (10) verändert werden können, und wobei die Fördereinrichtung (09) aus zwei umlaufend angetriebenen Förderbändern (07,08) gebildet ist.

8. Vorrichtung nach Anspruch 7,
**dadurch gekennzeichnet,**
**dass** das erste Förderband (07) von unten an den gewickelten Teigprodukten (02) zum Eingriff kommt, und das zweite Förderband (08) von oben an den gewickelten Teigprodukten (02) zum Eingriff kommt, wobei die translatorische Fördergeschwindigkeit des gewickelten Teigprodukts (02) und/oder die Rotationsgeschwindigkeit des gewickelten Teigprodukts (02) durch die Einstellung der Umlaufgeschwindigkeit des ersten Förderbands (07) und/oder durch die Einstellung der Umlaufgeschwindigkeit des zweiten Förderbands (08) veränderbar sind.

9. Vorrichtung nach Anspruch 8,
**dadurch gekennzeichnet,**
**dass** die Umlaufgeschwindigkeit des ersten Förderbands (07) und die Umlaufgeschwindigkeit des zweiten Förderbands (08) unabhängig voneinander einstellbar sind.

10. Vorrichtung nach Anspruch 8 oder 9,
**dadurch gekennzeichnet,**
**dass** das obere Förderband (08) der Fördereinrichtung (09) aus zumindest zwei zueinander beabstandet angeordneten Förderriemen (16, 17) besteht, wobei die beiden Förderriemen (16, 17) jeweils außermittig am gewickelten Teigprodukt (02) zur Anlage kommen.

11. Vorrichtung nach einem der Ansprüche 7 bis 10,
**dadurch gekennzeichnet,**
**dass** zur Bildung der Bremsstrecke (10) hinter dem unteren Förderband (07) der Kontrollstrecke (06) ein Förderband (11) mit einer geringeren Fördergeschwindigkeit angeordnet ist, wobei die gewickelten Teigprodukte (02) aufgrund der Differenz zwischen den Fördergeschwindigkeiten bei der Übergabe vom unteren Förderband (07) der Kontrollstrecke (06) auf das dahinter angeordnete Förderband (11) der Bremsstrecke (10) abgebremst und dadurch in die gewünschte Abrollbewegung versetzt werden.

12. Vorrichtung nach einem der Ansprüche 7 bis 11,
**dadurch gekennzeichnet,**
**dass** zwischen dem unteren Förderband (07) der Kontrollstrecke (06) und dem dahinter angeordnete Förderband (11) der Bremsstrecke (10) ein vertikaler Höhenversatz nach unten vorgesehen ist.

## Claims

1. A method for orienting wound dough products (02) in a defined end position, the dough product (02) being produced by winding a triangular or trapezoidal dough piece along a winding section (03), and the dough product (02) being wound starting from the base of the dough piece, and the narrower end of the dough piece forming an end protruding outside at the circumference of the dough product (02), and the end position of the dough product (02) being defined by a specific position of the end protruding at the outside, and the wound dough product (02) being decelerated from a translational starting speed to a translational end speed along a decelerating section (10), and the resulting deceleration torque being used as a driving torque for a rolling movement of the dough product (02) so as to cause the dough product (02) to roll on a surface, the sense of rotation of the rolling movement of the dough product (02) corresponding to the winding direction from the inside to the outside of the wound dough product (02), and the rolling movement being stopped by the rolling resistance caused by the end when the defined end position, in which the end of the dough product (02) is in contact with the surface, is reached,
**characterized in**
**that** the wound dough product (02) passes through a control section (06) between the end of the winding section (03) and the start of the deceleration section (10), wherein in the control section (06) two conveyor bands (07, 08) which are driven to circulate are brought into engagement on the dough product (02) following the winding section (03), and wherein in the control section (06) the translational conveying speed of the wound dough product (02) and/or the speed of rotation of the wound dough product (02) are amended and set to a predefined target value.

2. The method according to claim 1,
**characterized in**
**that** the speed of rotation of the wound dough product (02) is decelerated in the control section (06).

3. The method according to claim 2,
**characterized in**
**that** the speed of rotation of the wound dough product (02) is decelerated to zero in the control section (06).

4. The method according to claim 2,
**characterized in**
**that** the speed of rotation of the wound dough product (02) is reversed in the opposite direction in the control section (06), wherein the rotating movement in the opposite direction corresponds to the rotating movement during deceleration in the decelerating section (19).

5. The method according to any one of claims 1 to 4,
**characterized in**
**that** in the decelerating section (10), the wound dough product (02) is decelerated by being transferred from a first conveyor band (07), which is driven to circulate at a first conveying speed, to a second conveyor band, which is driven to circulate at a second conveying speed, whereby the desired rolling movement is imparted to the wound dough product.

6. The method according to claim 5,
**characterized in**
**that** in the decelerating section (10), the wound dough product (02) is displaced vertically downward when being transferred from the first conveyor band (07) to the second conveyor band (11).

7. A device for carrying out a method for orienting wound dough products (02) in a defined end position, the dough product (02) being produced by winding a triangular or trapezoidal dough piece along a winding section (03), and the dough product (02) being wound starting from the base of the dough piece, and the narrower end of the dough piece forming an end protruding outside at the circumference of the dough product (02), and the end position of the dough product (02) being defined by a specific position of the end protruding at the outside, and the wound dough product (02) being decelerated from a translational starting speed to a translational end speed along a decelerating section (10), and the resulting deceleration torque being used as a driving torque for a rolling movement of the dough product (02) so as to cause the dough product (02) to roll on a surface, the sense of rotation of the rolling movement of the dough product (02) corresponding to the winding direction from the inside to the outside of the wound dough product (02), and the rolling movement being stopped by the rolling resistance caused by the end when the defined end position, in which the end of the dough product (02) is in contact with the surface, is reached,
wherein the wound dough product (02) passes through a control section (06) between the end of the winding section (03) and the start of the deceleration section (10), wherein in the control section (06) two conveyor bands (07, 08) which are driven to circulate are brought into engagement on the dough product (02) following the winding section (03), and wherein in the control section (06) the translational conveying speed of the wound dough product (02) and/or the speed of rotation of the wound dough product (02) are set to a predefined target value, the device comprising the winding section (03) in which dough pieces are wound to form dough products (02), and the decelerating section (10) in which the dough products (02) are decelerated in a defined end position, **characterized in**
**that** the device (01) has a conveyor (09) for forming the control section (06) between the winding section (03) and the decelerating section (10), wherein the translational conveying speed of the wound dough product (02) and/or the speed of rotation of the wound dough product (02) are changeable in the control section (06) between the winding section (03) and the decelerating section (10) using the conveyor (09), and wherein the conveyor (09) is formed by two conveyor bands (07, 08) which are driven to circulate.

8. The device according to claim 7,
**characterized in**
**that** the first conveyor band (07) engages the wound dough products (02) from below and the second conveyor band (08) engages the wound dough products (02) from above, wherein the translational conveying speed of the wound dough product (2) and/or the speed of rotation of the wound dough product (02) is changeable by adjusting the speed of circulation of the first conveyor band (07) and/or by adjusting the speed of circulation of the second conveyor band (08).

9. The device according to claim 8,
**characterized in**
**that** the speed of circulation of the first conveyor band (07) and the speed of circulation of the second conveyor band (08) can be adjusted independently of each other.

10. The device according to claim 8 or 9,
**characterized in**
**that** the upper conveyor band (08) of the conveyor (09) consists of at least two spaced-apart conveyor belts (16, 17), wherein each of the two conveyor belts (16, 17) comes into contact with the wound dough product (02) eccentrically.

11. The device according to any of claims 7 to 10,
**characterized in**
**that** to form the decelerating section (10), a conveyor band (11) having a lower conveying speed is disposed downstream of the lower conveyor band (07) of the control section (06), wherein the wound dough products (02) are decelerated owing to the difference between the conveying speeds when being transferred from the lower conveyor band (07) of the control section (06) to the conveyor band (11) of the decelerating section (10) disposed downstream of said lower conveyor band, whereby the desired rolling movement is imparted to the wound dough products.

12. The device according to any of claims 7 to 11,
**characterized in**
**that** a downward vertical height difference is provided between the lower conveyor band (07) of the control section (06) and the conveyor band (11) of the decelerating section (10) disposed downstream of said lower conveyor band.

## Revendications

1. Procédé destiné à orienter des produits à base de pâte (02) enroulés, dans une position terminale définie, procédé
d'après lequel le produit à base de pâte (02) est réalisé par enroulement d'une pièce de pâte de forme triangulaire ou trapézoïdale, le long d'un parcours d'enroulement (03), et
d'après lequel le produit à base de pâte (02) est enroulé en débutant à partir de la base de la pièce de pâte, et d'après lequel l'extrémité plus étroite de la pièce de pâte forme un bout terminal faisant saillie à l'extérieur de la périphérie du produit à base de pâte (02), et d'après lequel la position finale du produit à base de pâte (02) est définie par une position déterminée du bout terminal en saillie à l'extérieur, et
d'après lequel le produit à base de pâte (02) enroulé est freiné, le long d'un parcours de freinage (10), d'une vitesse de translation de départ jusqu'à une vitesse de translation finale, et
d'après lequel le couple de freinage qui en résulte, est mis à profit en tant que couple d'entrainement pour un mouvement de roulement du produit à base de pâte (02), en vue de produire ainsi le roulement du produit à base de pâte (02) sur une base de support,
d'après lequel le sens de rotation du mouvement de roulement du produit à base de pâte (02) correspond à la direction d'enroulement de l'intérieur vers l'extérieur du produit à base de pâte (02) enroulé, et
d'après lequel lorsqu'on atteint la position finale définie pour laquelle le bout terminal du produit à base de pâte (02) vient s'appuyer contre la base de support, le mouvement de roulement est stoppé par la résistance au roulement engendré par le bout terminal,
**caractérisé**
**en ce que** le produit à base de pâte (02) enroulé traverse, entre la fin du parcours d'enroulement (03) et avant le parcours de freinage (10), un parcours de contrôle (06), en ce que deux bandes de transport (07, 08) entraînées en révolution sont amenées en prise avec le produit à base de pâte (02) dans le parcours de contrôle (06) à la suite du parcours d'enroulement (03), et en ce que dans le parcours de contrôle (06), on change et règle la vitesse de transport en translation du produit à base de pâte (02) enroulé et/ou la vitesse de rotation du produit à base de pâte (02) enroulé, à une valeur de consigne prescrite.

2. Procédé selon la revendication 1,
**caractérisé**
**en ce que** la vitesse de rotation du produit à base de pâte (02) enroulé est freinée dans le parcours de contrôle (06) .

3. Procédé selon la revendication 2,
**caractérisé**
**en ce que** la vitesse de rotation du produit à base de pâte (02) enroulé est freinée jusqu'à une valeur nulle dans le parcours de contrôle (06).

4. Procédé selon la revendication 2,
**caractérisé**
**en ce que** la vitesse de rotation du produit à base de pâte (02) enroulé est inversée dans le sens opposé dans le parcours de contrôle (06), le mouvement de rotation dans ledit sens opposé correspondant au mouvement de rotation lors du freinage dans le parcours de freinage (10).

5. Procédé selon l'une des revendications 1 à 4, **caractérisé**
**en ce que** dans le parcours de freinage (10), le produit à base de pâte (02) enroulé est freiné par le transfert à partir d'une première bande de transport (07) entraînée en révolution avec une première vitesse de transport, à une deuxième bande de transport (11) entraînée en révolution avec une deuxième vitesse de transport, en lui conférant ainsi le mouvement de roulement souhaité.

6. Procédé selon la revendication 5,
**caractérisé**
**en ce que** le produit à base de pâte (02) enroulé est, dans le parcours de freinage (10), décalé verticalement vers le bas lors du transfert de la première bande de transport (07) à la deuxième bande de transport (11).

7. Dispositif (01) pour la mise en oeuvre d'un procédé destiné à orienter des produits à base de pâte (02) enroulés, dans une position terminale définie, procédé d'après lequel le produit à base de pâte (02) est réalisé par enroulement d'une pièce de pâte de forme triangulaire ou trapézoïdale, le long d'un parcours d'enroulement (03), et
d'après lequel le produit à base de pâte (02) est enroulé en débutant à partir de la base de la pièce de pâte, et d'après lequel l'extrémité plus étroite de la pièce de pâte forme un bout terminal faisant saillie à l'extérieur de la périphérie du produit à base de pâte (02), et d'après lequel la position finale du produit à base de pâte (02) est définie par une position déterminée du bout terminal en saillie à l'extérieur, et
d'après lequel le produit à base de pâte (02) enroulé est freiné, le long d'un parcours de freinage (10), d'une vitesse de translation de départ jusqu'à une vitesse de translation finale, et
d'après lequel le couple de freinage qui en résulte, est mis à profit en tant que couple d'entrainement pour un mouvement de roulement du produit à base de pâte (02), en vue de produire ainsi le roulement du produit à base de pâte (02) sur une base de support,
d'après lequel le sens de rotation du mouvement de roulement du produit à base de pâte (02) correspond à la direction d'enroulement de l'intérieur vers l'extérieur du produit à base de pâte (02) enroulé, et
d'après lequel lorsqu'on atteint la position finale définie pour laquelle le bout terminal du produit à base de pâte (02) vient s'appuyer contre la base de support, le mouvement de roulement est stoppé par la résistance au roulement engendré par le bout terminal,
et en ce que le produit à base de pâte (02) enroulé traverse, entre la fin du parcours d'enroulement (03) et avant le parcours de freinage (10), un parcours de contrôle (06), en ce que deux bandes de transport (07, 08) entraînées en révolution sont amenées en prise avec le produit à base de pâte (02) dans le parcours de contrôle (06) à la suite du parcours d'enroulement (03), et en ce que dans le parcours de contrôle (06), on règle la vitesse de transport en translation du produit à base de pâte (02) enroulé et/ou la vitesse de rotation du produit à base de pâte (02) enroulé, à une valeur de consigne prescrite, le dispositif comprenant le parcours d'enroulement (03) sur lequel des pièces de pâte sont enroulées en produit à base de pâte (02), et comprenant également le parcours de freinage (10) sur lequel les produit à base de pâte (02) sont freinés jusqu'à une position finale définie,
**caractérisé**
**en ce que** le dispositif (01) présente, entre le parcours d'enroulement (03) et le parcours de freinage (10), un dispositif de transport (09) pour former le parcours de contrôle (06), en ce qu'avec le dispositif de transport (09), il est possible de faire varier la vitesse de transport en translation du produit à base de pâte (02) enroulé et/ou la vitesse de rotation du produit à base de pâte (02) enroulé dans le parcours de contrôle (06) entre le parcours d'enroulement (03) et le parcours de freinage (10), et en ce que le dispositif de transport (09) est formé par deux bandes de transport (07, 08) entraînées en révolution.

8. Dispositif selon la revendication 7,
**caractérisé**
**en ce que** la première bande de transport (07) vient en prise par le dessous avec les produits à base de pâte (02) enroulés, et la deuxième bande de transport (08) vient en prise par le dessus avec les produits à base de pâte (02) enroulés, la vitesse de transport en translation du produit à base de pâte (02) enroulé et/ou la vitesse de rotation du produit à base de pâte (02) enroulé pouvant être modifiées par le réglage de la vitesse de révolution de la première bande de transport (07) et/ou par le réglage de la vitesse de révolution de la deuxième bande de transport (08).

9. Dispositif selon la revendication 8,
**caractérisé**
**en ce que** la vitesse de révolution de la première bande de transport (07) et la vitesse de révolution de la deuxième bande de transport (08) peuvent être réglées indépendamment l'une de l'autre.

10. Dispositif selon la revendication 8 ou la revendication 9,
**caractérisé**
**en ce que** la bande de transport supérieure (08) du dispositif de transport (09) est constituée par au moins deux courroies de transport (16, 17) espacées mutuellement, les deux courroies de transport (16, 17) venant respectivement s'appuyer de manière non centrale contre le produit à base de pâte (02) enroulé.

11. Dispositif selon l'une des revendications 7 à 10,
**caractérisé**
**en ce que** pour former le parcours de freinage (10), à la suite de la bande de transport inférieure (07) du parcours de contrôle (06), est agencée une bande de transport (11) présentant une vitesse de transport moindre, les produits à base de pâte (02) enroulés étant, en raison de la différence entre les vitesses de transport, freinés lors du transfert de la bande de transport inférieure (07) du parcours de contrôle (06) à la bande de transport (11) du parcours de freinage (10), agencée à la suite, en produisant ainsi le mouvement de roulement souhaité des produits à base de pâte enroulés.

12. Dispositif selon l'une des revendications 7 à 11,
**caractérisé**
**en ce qu'**entre la bande de transport inférieure (07) du parcours de contrôle (06) et la bande de transport (11) du parcours de freinage (10), agencée à la suite, il est prévu un décalage en hauteur vertical, vers le bas.
